Europäisches Patentamt

European Patent Office

Office européen des brevets

(19)

(11) **EP 0 589 279 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(51) Int Cl.6: **H04Q 7/20**, H04B 7/26

(21) Anmeldenummer: **93114351.5**

(22) Anmeldetag: **07.09.1993**

(54) **Mobiles Funknetz mit hierarchischen Zellstrukturen**

Radio mobile network with hierarchical cell structures

Réseau radio mobile avec structure hiérarchique des cellules

(84) Benannte Vertragsstaaten:
**AT BE CH DE DK ES FR GB GR IE IT LI LU MC NL PT SE**

(30) Priorität: **23.09.1992 DE 4231858**

(43) Veröffentlichungstag der Anmeldung:
**30.03.1994 Patentblatt 1994/13**

(73) Patentinhaber: **SIEMENS AKTIENGESELLSCHAFT 80333 München (DE)**

(72) Erfinder:
- **Ivanov, Kolio, Dr.
  D-81369 München (DE)**
- **Schulz, Egon, Dr.
  D-80993 München (DE)**

(56) Entgegenhaltungen:
WO-A-92/12602    GB-A- 2 240 696
GB-A- 2 242 806

- **IEE COLLOQUIUM ON MOBILE COMMUNICATIONS IN THE YEAR 2000 9. Juni 1992 , LONDON (GB) Seiten 10.1 - 10.5 S. CHIA 'MIXED CELL ARCHITECTURE AND HANDOVER'**

**Beschreibung**

Die Erfindung bezieht sich auf ein mobiles Funknetz mit einer Anzahl von Basisstationen in räumlicher Anordnung nach Art eines Zellularsystems in einer hierarchischen Zellstruktur, bestehend aus einer Makrozelle und wenigstens einer Mikrozelle.

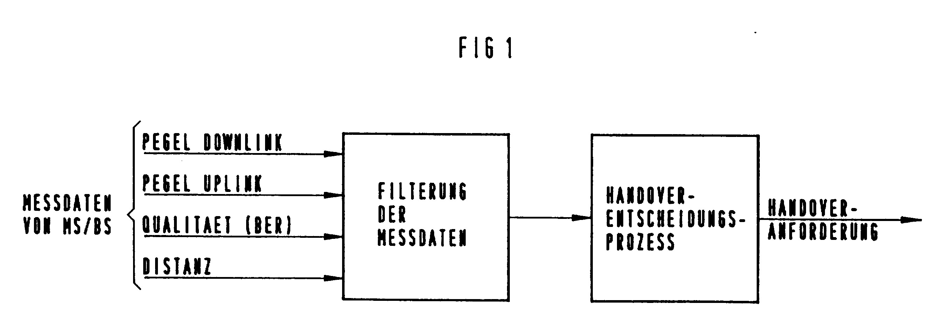

Die Umschaltung (Handover) vom Funkversorgungsbereich einer Zelle in den einer benachbarten Zelle kann aus unterschiedlichen Gründen initiiert werden. Handover-Gründe können zum Beispiel sein, daß der empfangene Pegel eine gewisse Schwelle unterschritten hat, die Qualität (Bitfehlerrate - BER) zu schlecht ist, die Distanz zur bedienenden Basisstation zu groß geworden ist, wegen zu hoher Interferenz, wegen Power Budget einer besseren Zelle oder auch aus Verkehrsgründen.Dabei handelt es sich um sogenannte statische Handover-Entscheidungen, d.h. die von der Mobilstation und/oder Basisstation gemessenen Daten, nämlich Pegel, Qualität, Distanz usw. oder die aus den gemessenen Daten abgeleiteten Größen werden unter Ausnutzung eines Filters beispielsweise durch Mittelung der Meßdaten mit von O & M (Operation and Maintenance) administrierbaren, zeitlich konstanten Schwellen verglichen. Dieser Vorgang ist in einem Blockschaltbild gemäß Figur 1 wiedergegeben. Die von einer Mobilstation und/oder Feststation einlaufenden Meßdaten werden einem Filter zugeführt, dem eine Einrichtung für den Handover-Entscheidungsprozeß nachgeschaltet ist, von der beim Vorliegen entsprechender Kriterien eine Handoveranforderung ausgeht.

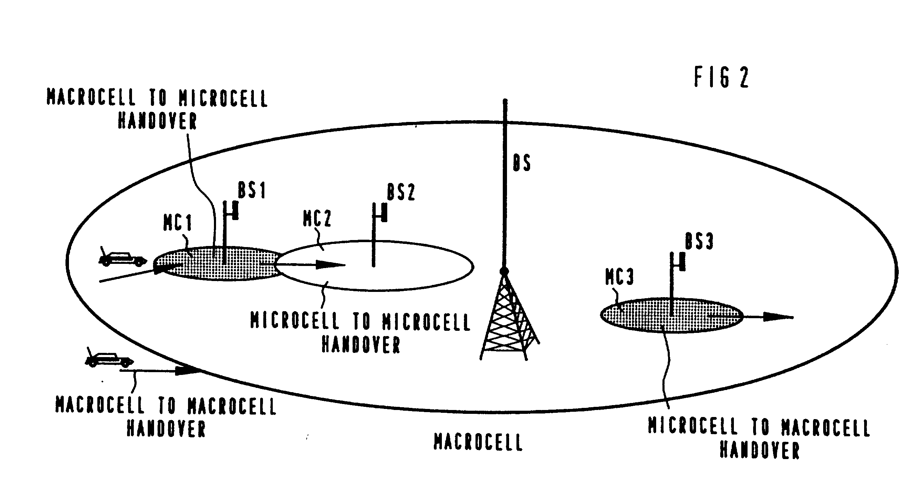

Um sowohl Kanalkapazitäten in Gebieten mit hohen Teilnehmerdichten als auch eine ausreichende Versorgung zwischen Gebieten hoher Teilnehmerdichte zur Verfügung zu stellen, wird man zu gemischten oder hierarchischen Zellstrukturen übergehen, bestehend aus kleinen Zellen (Mikrozellen), die wiederum in einer großen Zelle (Makrozelle, auch Schirmzelle genannt) integriert sind. Einen solchen Aufbau zeigt Figur 2. Dabei sind innerhalb einer Makrozelle mit der Basisstation BS mehrere Mikrozellen MC1, MC2, MC3 mit den Basisstationen BS1, BS2, BS3 angeordnet. Für eine Mobilstation, die sich in einem solchen gemischten Zellsystem bewegt, gibt es vier Arten des Handovers, nämlich von der Makrozelle zu einer weiteren Makrozelle, von der Makrozelle zu einer Mikrozelle, von einer Mikrozelle zu einer weiteren Mikrozelle sowie von der Mikrozelle zu einer Makrozelle. Der Radius der Mikrozellen wird dabei sehr klein sein und in der Regel nur einige hundert Meter betragen. Durch die Mikrozellen sollen die sich langsam bewegenden Mobilfunkteilnehmer versorgt werden, die Makrozellen (Schirmzellen) hingegen sollen die Funkversorgung der sich schnell bewegenden Mobilstationen gewährleisten.

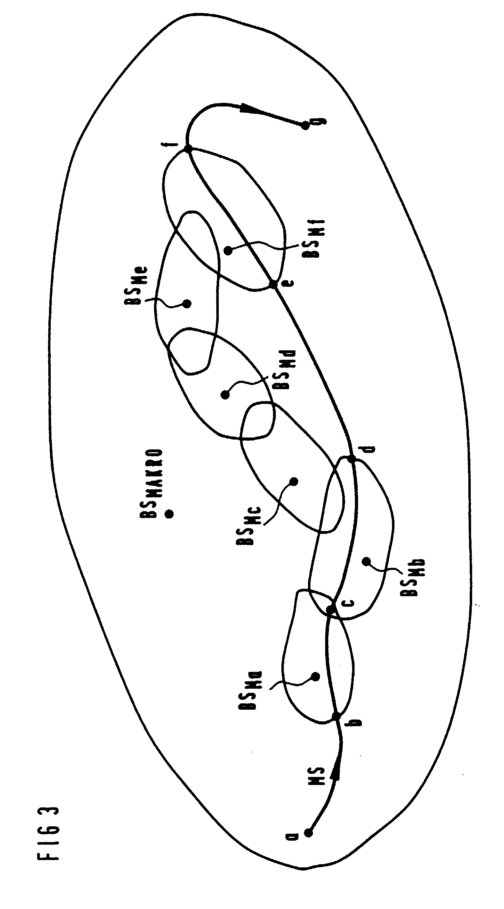

Durch die Aneinanderreihung von Mikrozellen, welche in der Makrozelle integriert sind, besteht die Möglichkeit, daß eine sich schnell bewegende Mobilstation, die der Feststation der Makrozelle zugeordnet ist und in den Funkversorgungsbereich einer in der Makrozelle befindlichen Mikrozelle hineinfährt, durch statische Handover-Entscheidungen der Feststation der Mikrozelle zugeordnet wird. Da die Mobilstation sich schnell bewegt und die Mikrozelle einen kleinen Durchmesser hat, wird die Mobilstation die Mikro-zelle schnell wieder verlassen, und es steht ein neuer Handover an. Dabei wird entweder ein Handover für die Mobilstation in die ursprüngliche Makrozelle, oder, wenn an die durchquerte Mikrozelle eine weitere Mikrozelle angrenzt, in die angrenzende Mikrozelle angefordert. Ein solches Szenario einer Mobilstation in einer hierarchischen Zellstruktur, das sich beliebig fortsetzen läßt, ist in Fig. 3 dargestellt. Dabei sind innerhalb einer Makrozelle mit der Basisstation $BS_{Makro}$ eine Reihe von Mikrozellen integiert mit den Feststationen $BS_{Ma}$ $BS_{Mb}$, $BS_{Mc}$, $BS_{Md}$, $BS_{Me}$ und $BS_{Mf}$. Eine Mobilstation MS bewegt sich längs eines Fahrweges von Punkt a nach Punkt g über die Punkte b,c,d,e und f, die im Randbereich einiger Mikrozellen liegen. Die Mobilstation ist dabei zunächst der Makrozelle mit der Feststation $BS_{Makro}$ zugeordnet und baut ein Gespräch auf. Sie fährt dann in den Funkversorgungsbereich der Mikrozelle mit der Feststation $BS_{Ma}$ hinein. Der Handover-Entscheidungsprozeß fordert einen Handover für die Mobilstation in die Mikrozelle mit der Feststation $BS_{Ma}$ an. Die Mobilstation MS fährt dann in den Funkversorgungsbereich der Mikrozelle mit der Feststation $BS_{Mb}$ hinein. Der Handover-Entscheidungsprozeß fordert einen Handover für die Mobilstation in die Mikrozelle mit der Feststation $BS_{Mb}$ an. Danach verläßt die Mobilstation den Funkversorgungsbereich der Mikrowelle mit der Feststation $BS_{Mb}$. Der Handover-Entscheidungsprozeß fordert nun einen Handover für die Mobilstation in die Makrozelle mit der Feststation $BS_{Makro}$ an. Die weiteren Mikrozellen liegen außerhalb des Fahrweges der Mobilstation, so daß erst beim Hineinfahren der Mobilstation in den Funkversorgungsbereich der Mikro-zelle mit der Feststation $BS_{Mf}$ der Handover-Entscheidungsprozeß einen Handover für die Mobilstation in die Mikro-zelle mit der Feststation $BS_{Mf}$ anfordert. Beim Verlassen des Funkversorgungsbereichs der Mikrozelle mit der Feststation $BS_{Mf}$ fordert der Handover-Entscheidungsprozeß einen Handover für die Mobilstation in die Makrozelle mit der Feststation $BS_{Makro}$ an. Die Mobilstation beendet das Gespräch und bleibt der Makrozelle mit der Feststation $BS_{Makro}$ zugeordnet. Dies alles erfordert einen hohen Signalisierungsaufwand. Weiter ist festzustellen, daß bei träger Ausführung der Handover-Entscheidung, beispielsweise bei großer Mittelungslänge der gemessenen Daten, das fortwährende Weiterreichen von einer Mikrozelle zu einer anderen zum Gesprächsverlust führen kann.

Bei den bisherigen Verfahren wird zur Entscheidung eines Handovers für eine Mobilstation die Geschwindigkeit des Mobilfunkteilnehmers nicht berücksichtigt. Die HandoverVerfahren basieren auf statischen Handover-Entscheidungen, d.h. die von der Mobilstation und/oder Basisstation gemessenen Daten oder aus den Meßdaten abgeleiteten Größen werden unter Ausnutzung eines Filters dem Handover-Entscheidungsprozeß zugeführt. In diesem werden die gefilterten Daten mit fest eingestellten oder O & M administrierbaren, zeitlich konstanten Schwellen verglichen. Unter- oder Überschreiten die gefilterten Daten die entsprechenden Schwellen, so wird für die betreffende Mobilstation ein Handover angefordert.

Aus der GB-A-2 242 806 ist ein zellulares Funksystem bekannt, bei dem ein Handover von einer Makrozelle zu einer Mikro-zelle nur vorgenommen wird, wenn sich ein Handgerät eine vorgegebene Zeitperiode in der Mikrozelle aufhält und die Funkverbindung eine bestimmte Verbindungsqualität übersteigt. Weiterhin ist aus der WO-A-92 12602 ein System zur Steuerung eines Handovers bekannt, bei dem auf der Grundlage einer gemittelten zeitlichen Veränderung der Signalqualität ein Inter- oder Intrazellhandover vorgenommen wird.

Der Erfindung liegt die Aufgabe zugrundem, in einer solchen gemischten Zellstruktur die Anzahl der Handover für sich schnell bewegende Mobilstationen zu reduzieren.

Diese Aufgabe wird bei einem Mobilfunknetz der eingangs beschriebenen Art gemäß der Erfindung gelöst durch eine zusätzlich zu den statischen Handover-Entscheidungen die Geschwindigkeit eines mobilen Funkteilnehmers berücksichtigende Umschaltung (Handover) vom Funkversorgungsbereich einer Makrozelle in den einer oder mehrerer weiterer Mikrozellen derart, daß für eine der Feststation der Makrozelle zugeordnete Mobilstation durch Vergleich der von der Mobilstation und/oder der Festsstation ermittelten Meßdaten über Pegel, Qualität, Distanz u.a. und/oder der aus den Meßdaten abgeleiteten Größen mit Schwellen im Handover-Entscheidungsprozeß ermittelt wird, ob sie sich im Funkversorgungsbereich der in der Makrozelle enthaltenen Mikrozelle befindet oder sich dieser nähert und bei positivem Ergebnis eine Einrichtung zur Zeiterfassung (Timer) mit einem beliebigen, aber festen Zeitintervall gestartet wird, während dem fortlaufend auf der Basis der im Handover-Entscheidungsprozeß einlaufenden Meßdaten ermittelt wird, ob sich die Funkversorgung für die betreffende Mobilstation durch die Feststation der Mikrozelle wesentlich oder unwesentlich verbessert hat, und daß die Mikro-zelle für ankommendes Handover für die betreffende Mobilstation gesperrt wird, wenn sich die Funkversorgung bezüglich der Mikrozelle innerhalb eines Zeitintervalls wesentlich verbessert hat als Zeichen schneller Bewegung der Mobilstation und vom Handover-Entscheidungsprozeß ein Handover in die Mikrozelle angefordert wird für den Fall, daß sich die Funkversorgung nach dem Ablaufen des Timers als Zeichen langsamer Bewegung der Mobilstation unwesentlich verbessert hat.

Bei diesem geschwindigkeitsabhängigen Handoververfahren für hierarchische Zellstrukturen wird bei einer in das Funkversorgungsgebiet einer Mikrozelle hineinfahrenden Mobilstation überprüft, ob sich die Funkversorgung der Mobilstation bezüglich der Mikrozelle innerhalb eines Zeitintervalls wesentlich oder unwesentlich verbessert.

Verbessert sich die Funkversorgung innerhalb eines Zeitintervalls, d.h. während des Ablaufens eines Timers wesentlich, so kann man daraus schließen, daß sich die Mobilstation schnell auf die Feststation der Mikrozelle zubewegt. Mit diesem Kriterium wird indirekt durch den Handover-Entscheidungsprozeß die Mikrozelle für die sich schnell bewegende Mobilstation gesperrt. Die Sperrung der Mikrozelle wird erst dann wieder aufgehoben, wenn die Mobilstation das Funkversorgungsgebiet der Mikrozelle verläßt. Verbessert sich hingegen die Funkversorgung nach einem Zeitintervall, d.h. nach dem Ablaufen eines Timers unwesentlich, so kann man daraus schließen, daß sich die Mobilstation langsam auf die Feststation der Mikrozelle zubewegt. Mit diesem Kriterium wird vom Handover-Entscheidungsprozeß ein Handover in die Mikrozelle angefordert.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

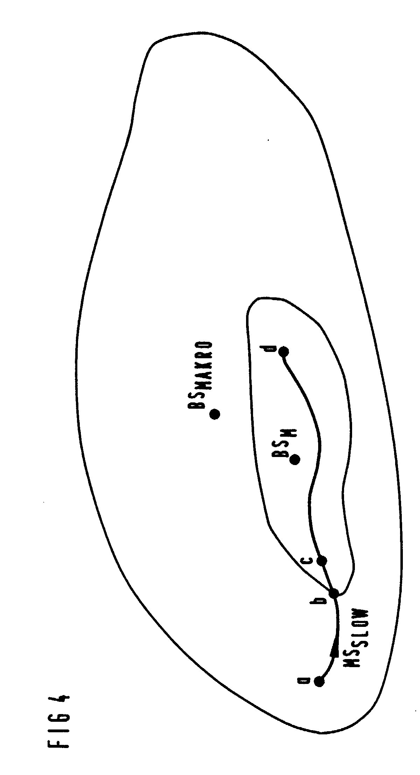

Es sind dabei in den Figuren 4 bis 7 in Teildarstellungen verschiedene Varianten gezeigt für eine sich mit unterschiedlicher Geschwindigkeit bewegende Mobilstation innerhalb einer Makrozelle und in dieser integrierten Mikrozellen. Der Umschaltvorgang wird unter Hinweis auf die betreffenden Varianten erläutert.

Als erfindungswesentliches Merkmal bei den hier beschriebenen Verfahren zur Entscheidungsfindung eines Handovers einer Mobilstation in einer hierarchischen Zellstruktur aus einer Makrozelle und mindestens einer oder mehreren Mikrozellen ist anzusehen, daß zusätzlich zu den statischen Handover-Entscheidungen die Geschwindigkeit der betreffenden Mobilstation berücksichtigt wird. Die Integration der Geschwindigkeit der Mobilstationen bzw. der Mobilfunkteilnehmer läßt sich in allen Mobilfunksystemen realisieren, in denen in beliebigen, aber festen Zeitintervallen Meßdaten, wie z.B. empfangener Pegel, Qualität, Distanz usw. von der Mobilstation und/oder Basisstation und/oder aus den Meßdaten abgeleiteten Größen an den Handover-Entscheidungsprozeß geliefert werden. Im GSM-System werden in der Regel in $T_{SACCH}$-Intervallen oder einem Vielfachen davon Meßdaten und/oder aus den Meßdaten abgeleitete Größen an den Handover-Entscheidungsprozeß übermittelt. Ein $T_{SACCH}$-Intervall beträgt ca. 480 msec.

Als Ausgangssituation ist vorgesehen, daß sich eine Mobilstation in einer hierarchisch angeordneten Zellstruktur befindet, bestehend aus einer Makrozelle und mindestens einer oder mehreren Mikrozellen, und daß die Mobilstation der Feststation der Makrozelle zugeordnet ist. Durch den Vergleich der von der Mobilstation und/oder der Feststation ermittelten Meßdaten und/oder aus den Meßdaten abgeleiteten Größen wird mit Schwellen im Handover-Entscheidungsprozeß ermittelt, ob sich die Mobilstation in dem Funkversorgungsbereich der in der Makrozelle enthaltenen Mikrozelle befindet, oder sich dem Funkversorgungsbereich der in der Makrozelle enthaltenen Mikrozelle nähert.

Ist dies der Fall, so wird im Handover-Entscheidungsprozeß ein Timer mit dem Anfangswert $T_O$ gestartet. Der Timer bzw. das zu überwachende Zeitintervall wird dabei so gewählt, daß es größer oder gleich einer Meßperiode der im Handover-Entscheidungsprozeß einlaufenden Meßdaten ist. Für das GSM-System sollte demzufolge das zu überwachende Zeitintervall ein Vielfaches von $T_{SACCH}$ sein.

Während des Ablaufens des Timers $T_{HO}$ bzw. während des beliebigen, aber festen Zeitintervalls wird auf der Basis der im Handover-Entscheidungsprozeß einlaufenden Meßdaten von der Mobilstation und/oder Basisstation und/oder der aus den Meßdaten abgeleiteten Größen ermittelt, ob die Mobilstation sich noch immer im Funkversorgungsbereich der Mikrozelle befindet. Ferner wird im Handover-Entscheidungsprozeß überprüft, ob sich die Funkversorgung für die betreffende Mobilstation durch die Feststation der Mikrozelle wesentlich oder unwesentlich verbessert hat.

Wird im Handover-Entscheidungsprozeß festgestellt, daß nach Ablauf des Timers bzw. nach dem Zeitintervall die Mobilstation sich noch immer im Funkversorgungsbereich der Mikrozelle befindet und die Funkversorgung sich unwesentlich verbessert hat, so wird ein Handover für die betreffende Mobilstation in die Mikrozelle hinein angefordert. Dies trifft zu für die Variante nach Figur 4, die den Handovervorgang für eine langsame Mobilstation wiedergibt, für die kurz nach dem Erreichen des Funkversorgungsbereiches der Mikrozelle der Timer abläuft und der Handover-Entscheidungsprozeß feststellt, daß sich die Funkversorgung der Mobilstation hinsichtlich der Mikrozelle nicht wesentlich verbessert hat und der Handover-Entscheidungsprozeß daher einen Handover für die Mobilstation in die Mikrozelle hinein beantragt.

Beim Ausführungsbeispiel nach Figur 4 ist eine von Punkt a startende langsame Mobilstation MS der Makrozelle mit der Feststation $BS_{Makro}$ zugeordnet und baut ein Gespräch auf. Am Punkt b erreicht die Mobilstation MS eine in der Makrozelle integrierte Mikrozelle mit der Feststation $BS_M$. Die Mobilstation MS befindet sich im Funkversorgungsbereich der Mikrozelle und der Handover-Entscheidungsprozeß startet den Timer $T_{HO}$. Es wird angenommen, daß der Timer $T_{HO}$ abgelaufen ist, wenn die Mobilstation MS den Punkt c unweit von b erreicht hat. Da die Mobilstation MS sich noch im Funkversorgungsbereich der Mikrozelle mit der Feststation $BS_M$ befindet und die Funkversorgung der Mobilstation MS durch die Feststation $BS_M$ der Mikrozelle sich unwesentlich verbessert hat, wird ein Handover in die Mikrozelle angefordert. Bei Erreichen von Punkt d, der sich ebenfalls innerhalb der Mikrozelle befindet, beendet die Mobilstation MS das Gespräch in der Mikrozelle und geht in den Idle Mode.

Wird dagegen vor dem Ablaufen des Timers bzw. innerhalb des Zeitintervalls im Handover-Entscheidungsprozeß ermittelt, daß die Mobilstation sich immer noch im Funkversorgungsbereich der Mikrozelle befindet und die Funkversorgung bezüglich der Mikrozelle sich wesentlich verbessert hat, so deutet dies darauf hin, daß sich die Mobilstation schnell auf die Feststation der Mikrozelle zubewegt, und die Mikrozelle wird durch den Handover-Entscheidungsprozeß für ankommendes Handover für die betreffende Mobilstation gesperrt. Der Handover-Entscheidungsprozeß hebt die Sperre für ankommendes Handover in die Mikrozelle für die betreffende Mobilstation dann auf, wenn der Handover-Entscheidungsprozeß festgestellt hat, daß die Mobilstation den Funkversorgungsbereich der Mikrozelle verlassen hat. Mit dem Aufheben der Sperre wird auch der Timer zurückgesetzt.

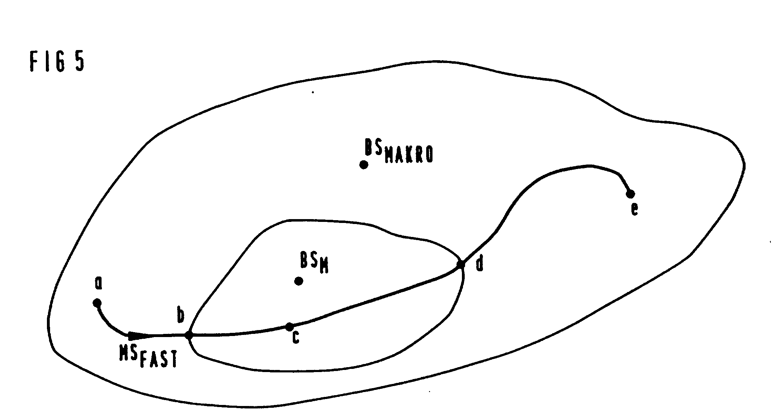

Dieser Fall ist in Figur 5 dargestellt, bei dem eine schnelle Mobilstation MS der Makrozelle mit der Feststation $BS_{Makro}$ zugeordnet ist und ein Gespräch aufbaut. Die Mobilstation fährt im Punkt b in den Funkversorgungsbereich der Mikrozelle mit der Feststation $BS_M$ hinein und der Handover-Entscheidungsprozeß startet den Timer $T_{HO}$. Während des Ablaufens des Timers $T_{HO}$ stellt der Handover-Entscheidungsprozeß fest, daß die Mobilstation MS sich noch im Funkversorgungsbereich der Mikrozelle mit der Feststation $BS_M$ befindet und die Funkversorgung der Mobilstation durch die Feststation $BS_M$ der Mikrozelle sich wesentlich verbessert hat (Punkt c). Die Mikrozelle mit der Feststation $BS_M$ wird durch den Handover-Entscheidungsprozeß für ankommendes Handover für die betreffende Mobilstation gesperrt und daher wird kein Handover in die Mikrozelle angefordert. Die Mobilstation bleibt somit der Makrozelle mit der Feststation $BS_{Makro}$ zugeordnet. Die schnelle Mobilstation MS verläßt im Punkt d den Funkversorgungsbereich der Mikrozelle mit der Feststation $BS_M$; die Sperre wird aufgehoben und der Timer $T_{HO}$ wird zurückgesetzt. Die schnelle Mobilstation MS bleibt der Makrozelle mit der Feststation $BS_{Makro}$ zugeordnet und beendet das Gespräch.

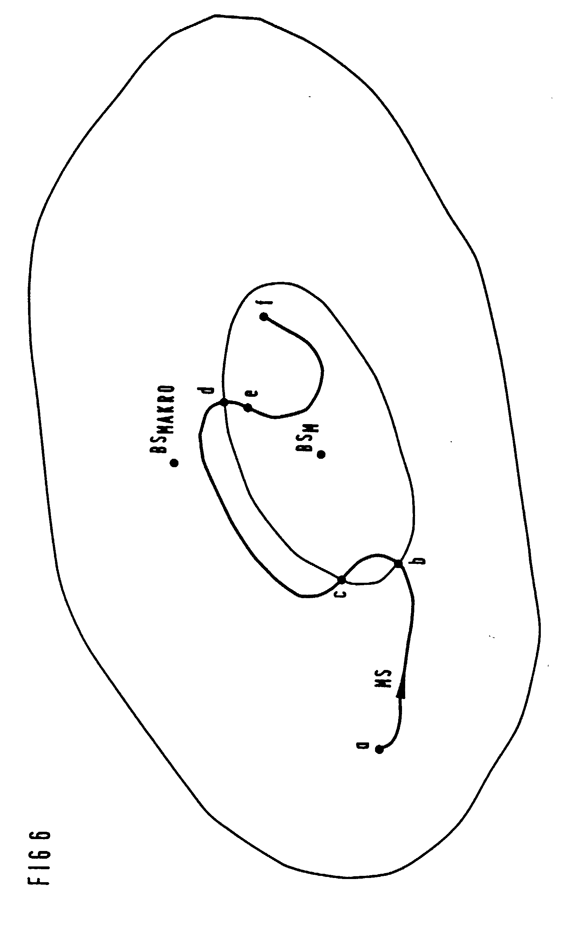

Wird vor dem Ablaufen des Timers bzw. innerhalb des Zeitintervalls auf der Basis der im Handover-Entscheidungsprozeß einlaufenden Meßdaten von Mobilstation und/oder Basisstation und/oder der aus den Meßdaten abgeleiteten Größen ermittelt, daß die Mobilstation sich nicht mehr im Funkversorgungsbereich der Mikrozelle befindet, so wird der Timer zurückgesetzt. Der Timer wird wieder gestartet, wenn im Handover-Entscheidungsprozeß erkannt wird, daß sich die Mobilstation wieder im Funkversorgungsbereich einer Mikrozelle befindet. Dieser Fall ist im Ausführungsbeispiel nach Fig. 6 wiedergegeben. Es kann sich beispielsweise um das Szenario in einer Großstadt handeln, bei der entsprechende Umwege zu fahren sind, um zum Ziel zu gelangen, wobei der Stadtkern zusätzlich durch eine Mikrozelle versorgt wird. Wie in den voran beschriebenen Ausführungsbeispielen ausgeführt, ist auch hier eine sich zunächst außerhalb der Mikrozelle befindende Mobilstation MS der Makrozelle der Feststation $BS_{Makro}$ zugeordnet und baut dort ein Gespräch auf. Die Mobilstation fährt am Punkt b in den Funkversorgungsbereich der Mikrozelle mit der Feststation $BS_M$ hinein und der Handover-Entscheidungsprozeß startet den Timer $T_{HO}$. Die Mobilstation MS verläßt am Punkt c den Funkversorgungsbereich der Mikrozelle wieder, bevor der Timer $T_{HO}$ abgelaufen ist. Auf der Stecke b - c hat der Handover-Entscheidungsprozeß keine wesentliche Verbesserung der Funkversorgung der Mobilstation durch die Feststation $BS_M$ der Mikrozelle festgestellt. Der Timer $T_{HO}$ wird gestoppt, zurückgesetzt und nicht wiedergestartet, da die Mobilstation MS sich nicht mehr im Funkversorgungbereich der Mikrozelle mit der Feststation $BS_M$ befindet. Die Mobilstation MS bleibt der Makrozelle mit der Feststation $BS_{Makro}$ zugeordnet. Am Punkt d erreicht die Mobilstation MS wieder den Funkversorgungsbereich der Mikrozelle und der Handover-Entscheidungsprozeß startet daraufhin den Timer $T_{HO}$. Die Mobilstation befindet sich im Punkt e noch im Funkversorgungsbereich der Mikrozelle mit der Feststation $BS_M$. Der Timer $T_{HO}$ ist abgelaufen und der HandoverEntscheidungsprozeß stellt fest, daß die Funkversorgung der Mobilstation durch die Feststation $BS_M$ der Mikrozelle sich unwesentlich verbessert hat. Demzufolge wird für die Mobilstation MS vom Handover-Entscheidungsprozeß ein Handover in die Mikrozelle angefordert. Am Punkt f, der sich ebenfalls noch innerhalb der Mikrozelle befindet, beendet die Mobilstation MS das Gespräch und bleibt der Mikrozelle mit der Feststation $BS_M$ zugeordnet.

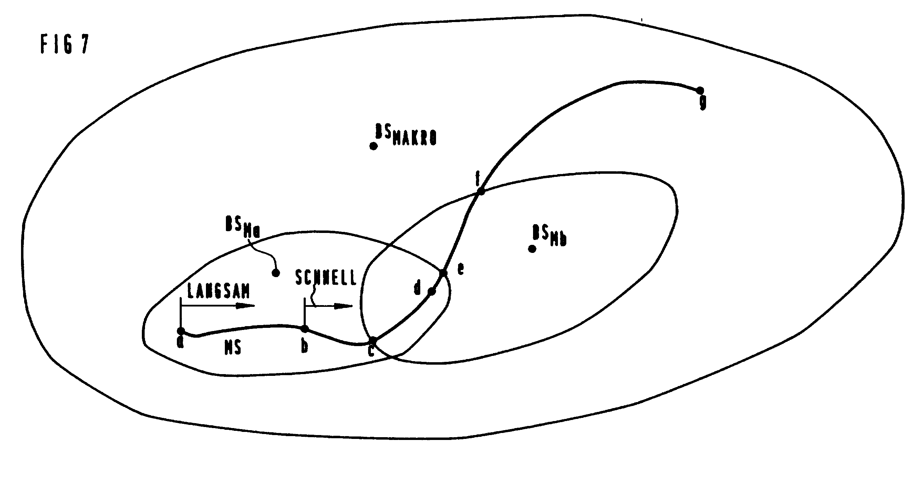

Das Verfahren ist auch dann anwendbar, wenn eine Mobilstation zu der Feststation einer Mikrozelle einer hierarchischen Zellstruktur zugeordnet ist und auf eine angrenzende Mikrozelle zufährt. Bewegt sich die Mobilstation langsam auf die angrenzende Mikrozelle zu, so wird mit diesem Verfahren für die Mobilstation ein Handover in die angrenzende Mikrozelle angefordert; bewegt sie sich dagegen schnell, so wird für sie ein Handover in die darüberliegende Makrozelle angefordert. Eine solche Variante ist in Figur 7 dargestellt, bei der eine langsame Mobilstation in einer Mikrozelle ein Gespräch aufbaut und sich mit schneller Geschwindigkeit einer angrenzenden Mikrozelle nähert, hineinfährt und nach kurzer Zeit die angrenzende Mikro-zelle verläßt. Im einzelnen sieht das so aus, daß eine langsame Mobilstation MS am Punkt a innerhalb der linken Mikrozelle der Feststation $BS_{Ma}$ dieser Mikrozelle zugeordnet ist und ein Gespräch aufbaut. Im Bereich von Punkt b erhöht die Mobilstation MS die Geschwindigkeit. Die mittlerweile schnelle Mobilstation MS erreicht am Punkt c den Versorgungsbereich der angrenzenden Mikrozelle mit der Feststation $BS_{Mb}$, worauf der Timer $T_{HO}$ im Handover-Entscheidungsprozeß gestartet wird. Bei Erreichen von Punkt d - kurz vor Verlassen der ursprünglichen Mikrozelle mit der Feststation $BS_{Ma}$ ist der Timer $T_{HO}$ noch nicht abgelaufen. Im Handover-Entscheidungsprozeß wird festgestellt, daß sich die Funkversorgung der Mobilstation MS durch die angrenzende Mikrozelle mit der Feststation $BS_{Mb}$ wesentlich verbessert hat. Demzufolge wird vom Handover-Entscheidungsprozeß die angrenzende Mikrozelle mit der Feststation $BS_{Mb}$ für ankommendes Handover für die betreffende Mobilstation gesperrt. Am Punkt e verläßt die Mobilstation den ursprünglichen Funkversorgungsbereich der Mikrozelle mit der Feststation $BS_{Ma}$. Der Handover Entscheidungsprozeß stellt auf der Basis der einlaufenden Meßdaten von Mobilstation und/oder Basisstation $BS_{Ma}$ fest, daß die Verbindung zwischen Mobilstation MS und Feststation $BS_{Ma}$ der linken Mikrozelle in der Qualität zu schlecht geworden ist oder der Pegel zu klein oder die Distanz zu groß geworden ist und fordert daher auf der Basis statischer Entscheidungen einen Handover in die darüberliegende Makrozelle an, da die Mikrozelle mit der Feststation $BS_{Mb}$ für ankommendes Handover für die betreffende Mobilstation gesperrt ist. Die schnelle Mobilstation MS verläßt am Punkt f den Funkversorgungsbereich der Mikrozelle mit der Feststation $BS_{Mb}$. Die Sperre wird aufgehoben und der Timer $T_{HO}$ wird zurückgesetzt. Die Mobilstation MS beendet das Gespräch in der Makrozelle (Punkt g) und geht in den Idle Mode über.

Zwischen dem Zurücksetzen des Timers und dem Wiederstarten des Timers $T_{HO}$ für ein und dieselbe Verbindung kann ein Überwachungstimer TR eingeführt werden. Der Überwachungstimer TR wird beim Zurücksetzen des Timers gestartet und erst nach Ablauf des Überwachungstimers darf der Timer, falls sich die Mobilstation in dem Funkversorgungsbereich einer Zelle befindet, wieder gestartet werden. Timer $T_{HO}$ und Überwachungstimer TR können auch als Zähler implementiert sein. Der Timer $T_{HO}$ wird pro Verbindung verwaltet oder auch pro Verbindung und Nachbarzelle. Da nämlich an eine Mikrozelle mehrere Mikrozellen angrenzen können, werden somit also alle Nachbarzellen in den Handover-Entscheidungsprozeß mit einbezogen. Ferner wird pro Nachbarzelle eine Schwelle verwaltet, die im Handover-Entscheidungsprozeß dazu dient, festzustellen, ob sich die Funkversorgung wesentlich oder unwesentlich verbessert hat. Der zusätzliche Überwachungstimer TR wird pro Verbindung oder pro Verbindung und Nachbarzelle verwaltet. Ferner sind die verschiedenen Möglichkeiten gegeben, daß Timer und Überwachungstimer sowohl den uplink als auch den downlink bei Duplex-Systemen überwachen oder auch nur den downlink oder nur den uplink. Die Anfangswerte der Timer und Überwachungstimer im uplink und downlink können identisch oder auch unterschiedlich sein. Sie können ferner durch eine abgesetzte Einheit (z.B. Operation and Maintenance Centre) mit Anfangswerten belegt werden.

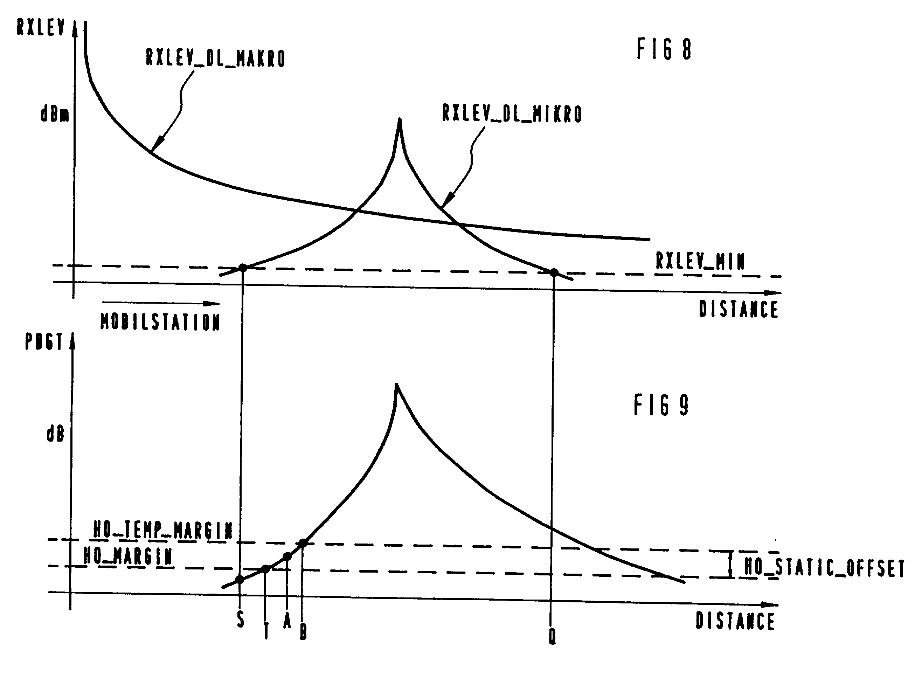

Anhand der Figuren 8 und 9 soll das funktionale Verhalten des Handover-Entscheidungsprozesses für schnelle und langsame Mobilstationen erläutert werden.

In Figur 8 ist der empfangene Pegel einer Mobilstation als Funktion des Abstandes von der Feststation einer Makrozelle und der einer in der Makrozelle enthaltenen Mikrozelle skizziert. Dabei bedeutet RXLEV DL MAKRO der empfangene Pegel der Mobilstation von der Makrozelle und RXLEV DL MIKRO der von der Mikrozelle. Ferner ist in Figur 8 der minimale empfangene Pegel eingezeichnet, den eine Mobilstation von einer Feststation empfangen muß, um eine Verbindung zu der betreffenden Feststation aufzubauen.

Figur 9 zeigt den Verlauf einer aus den empfangenen Pegeln RXLEV DL MAKRO, RXLEV DL MIKRO und weiteren Variablen berechnete Größe. Diese Größe wird Power Budget (PBGT) genannt und gibt den relativen Pegel zu der Nachbarzelle (hier Mikrozelle) an. Ist das PBGT größer als Null bzw. eine Schwelle, so ist die Funkversorgung durch die Nachbarzelle (Mikrozelle) besser als durch die zugeordnete Feststation.Durch die Größe PBGT läßt sich die Zellgrenze einer Zelle angeben.

Das PBGT kann wie folgt berechnet werden:

$$PBGT = MIN(MS\ MAKRO,P) - RXLEV\ DL\ MAKRO$$

$$-(MIN(MS\ MIKRO,P) - RXLEV\ DL\ MIKRO)$$

Dabei bedeutet P die maximale mögliche Sendeleitung der Mobilstation, MS MAKRO bzw. MS MIKRO die maximal erlaubte Sendeleistung der Mobilstation in der Makrozelle bzw. Mikrozelle, RXLEV DL MAKRO und RXLEV DL MIKRO die empfangenen Pegel von der Makro- und Mikrozelle.

Ferner sind in Figur 9 die Schwellen HO TEMP MARGIN und HO MARGIN eingezeichnet. Diese Schwellen werden zum Vergleich der abgeleiteten Größe PBGT benutzt, um bestimmte Zustände der Mobilstation zu charakterisieren. Mit HO MARGIN und der Schwelle RXLEV MIN wird die Zellgrenze definiert. HO TEMP MARGIN ist ein Maß, ob sich die Funkversorgung der Mobilstation durch die Nachbarzelle wesentlich oder unwesentlich verbessert hat.

Sind die Bedingungsgleichungen

$$RXLEV\ DL\ MIKRO > RXLEV\ MIN \tag{1}$$

$$PBGT > HO\ MARGIN \tag{2}$$

erfüllt, so hat die Mobilstation die Zellgrenze zur Mikrozelle überschritten und es wird der Timer $T_{HO}$ mit dem Startwert $T_O$ gestartet. Ist mindestens eine der beiden Bedingungen nicht erfüllt, so wird der Timer $T_{HO}$ gestoppt und zurückgesetzt.

Während der Timer $T_{HO}$ läuft, wird das Power Budget mit der Schwelle

$$HO\ TEMP\ MARGIN = HO\ MARGIN + HO\ STATIC\ OFFSET$$

verglichen. Wird vor dem Ablauf des Timers $T_{HO}$ festgestellt, daß

$$PBGT \geq HO\ TEMP\ MARGIN\ ,$$

so wird die benachbarte Mikrozelle für die betreffende Mobilstation gesperrt, da das Überschreiten einer gewissen Schwelle innerhalb eines Zeitintervalls auf eine schnelle Mobilstation deutet.

Wird dagegen beim Ablauf des Timers $T_{HO}$ festgestellt, daß

$$PBGT < HO\ TEMP\ MARGIN$$

so wird ein Handover in die benachbarte Mikrozelle beantragt. In diesem Fall wurde festgestellt, daß sich die Verbesserung der Funkversorgung der Mobilstation durch die Mikrozelle innerhalb des Zeitintervalls nur unwesentlich verbessert hat.

Eine Mobilstation bewegt sich auf die Mikrozelle zu. Nachdem die Mobilstation die Zellgrenze der Mikrozelle erreicht hat (Punkt T in Figur 9), wird der Timer $T_{HO}$ mit dem Startwert $T_O$ gestartet. Während des Ablaufens des Timers $T_{HO}$ wird im Handover-Entscheidungsprozeß abgefragt, ob sich die Funkversorgung der Mobilstation durch die Mikrozelle wesentlich oder unwesentlich verbessert hat. Am Punkt A läuft der Timer $T_{HO}$ ab und der Handover-Entscheidungsprozeß stellt fest, daß die Bedingung für eine unwesentliche Verbesserung der Funkversorgung für die Mobilstation innerhalb des Zeitintervalls $T_O$ durch die Mikro-zelle erfüllt ist, nämlich

$$PBGT < HO\ TEMP\ MARGIN.$$

Daraufhin fordert der Handover-Entscheidungsprozeß einen Handover für die Mobilstation in die Mikrozelle an.

Wird dagegen vor Ablauf des Timers $T_{HO}$ von der Mobilstation der Punkt B erreicht, an dem die Beziehung

$$PBGT \geq HO\ TEMP\ MARGIN$$

gilt, so wird die Mikrozelle für die betreffende Mobilstation gesperrt. Beim nochmaligen Überqueren der Zellgrenze (Punkt Q oder Punkt T) wird die Sperre aufgehoben und der Timer $T_{HO}$ zurückgesetzt.

**Patentansprüche**

1.  Mobiles Funknetz mit einer Anzahl von Basisstationen (BS, BS1, BS2, BS3) in gegenseitiger räumlicher Anordnung nach Art eines Zellularsystems in einer hierarchischen Zellstruktur, bestehend aus einer Makrozelle und wenigstens einer Mikrozelle (MC1), wobei eine Ermittlung in einem Handover-Entscheidungsprozeß, ob sich eine Mobilstation eines mobilen Funkteilnehmers im Funkversorgungsbereich der in der Makrozelle enthaltenen Mikrozelle (MC1) befindet oder sich dieser nähert, durch Vergleich der von der Mobilstation und/oder der Feststation (BS1) ermittelten Meßdaten über Pegel, Qualität, Distanz u.a. und/oder der aus den Meßdaten abgeleiteten Größen mit Schwellen durchgeführt wird,
    **gekennzeichnet durch**

    -   eine Umschaltung vom Funkversorgungsbereich der Makrozelle in den Funkversorgungsbereich einer oder mehrerer weiterer Mikrozellen (MC1, MC2, MC3) unter Berücksichtigung der Geschwindigkeit des mobilen Funkteilnehmers zusätzlich zu den statischen Handover-Entscheidungen,
    -   Starten einer Einrichtung zur Zeiterfassung (Timer) mit einem beliebigen, aber festen Zeitintervall bei positiven Ergebnis der Ermittlung im Handover-Entscheidungsprozeß,
    -   eine fortlaufende Ermittlung auf der Basis der im Handover-Entscheidungsprozeß einlaufenden Daten während des Zeitintervalls, ob sich die Funkversorgung für die betreffende Mobilstation durch die Feststation (BS1) der Mikrozelle (MC1) wesentlich oder unwesentlich verbessert hat,
    -   Sperrung der Mikrozelle (MC1) für ein ankommendes Handover für die betreffende Mobilstation, wenn sich die Funkversorgung bezüglich der Mikrozelle (MC1) innerhalb des Zeitintervalls wesentlich verbessert hat als Zeichen schneller Bewegung der Mobilstation, und
    -   Anforderung eines Handover in die Mikrozelle (MC1) vom Handover-Entscheidungsprozeß für den Fall, daß sich die Funkversorgung nach dem Ablaufen des Timers unwesentlich verbessert hat als Zeichen langsamer Bewegung der Mobilstation.

2.  Funknetz nach Anspruch 1,
    **dadurch gekennzeichnet, daß**
    die Sperre für ein ankommendes Handover in die Mikrozelle (MC1) für die betreffende Mobilstation aufgehoben und der Timer zurückgesetzt wird, wenn der Handover-Entscheidungsprozeß festgestellt hat, daß die Mobilstation den Funkversorgungsbereich der Mikrozelle (MC1) verlassen hat.

3.  Funknetz nach Anspruch 2,
    **dadurch gekennzeichnet, daß**
    der Timer erneut gestartet wird, wenn im Handover-Entscheidungsprozeß erkannt wird, daß sich die Mobilstation wieder im Funkversorgungsbereich einer Mikrozelle (MC1, MC2, MC3) befindet.

4.  Funknetz nach einem der Ansprüche 1 bis 3,
    **gekennzeichnet durch**
    einen entsprechenden Ablauf der Handover-Prozedur für den Fall, daß die Mobilstation zu der Feststation (BS1) einer Mikrozelle (MC1) einer hierarchischen Zellstruktur zugeordnet ist und sich einer angrenzenden Mikrozelle (MC2) nähert.

5.  Funknetz nach Anspruch 4,
    **dadurch gekennzeichnet, daß**
    nach einem erfolgreichen Handover der Timer gestoppt und zurückgesetzt wird.

6.  Funknetz nach Anspruch 5,

**dadurch gekennzeichnet, daß**

bei langsamer Bewegung der Mobilstation auf die angrenzende Mikrozelle (MC2) zu für die Mobilstation ein Handover in die angrenzende Mikrozelle (MC2) und bei schneller Bewegung ein Handover in die darüberliegende Makrozelle angefordert wird.

**7.** Funknetz nach einem der Ansprüche 1 bis 6,
**dadurch gekennzeichnet, daß**
das zu überwachende Zeitintervall größer oder gleich einer Meßperiode für die Bewertung der im Handover-Entscheidungsprozeß eingehenden Empfangsdaten ist.

**8.** Funknetz nach einem der Ansprüche 1 bis 7,
**dadurch gekennzeichnet, daß**
das zwischen dem Zurücksetzen des Timers und dem Wiederstarten des Timers für ein und dieselbe Verbindung ein Überwachungstimer vorgesehen ist, der beim Zurücksetzen des Timers gestartet wird und bewirkt, daß der Timer erst nach Ablauf des Überwachungstimers, falls sich die Mobilstation im Funkversorgungsvereich einer Mikrozelle (MC1, MC2, MC3) befindet, wieder gestartet werden kann.

**9.** Funknetz nach einem der Ansprüche 1 bis 8,
**dadurch gekennzeichnet, daß**
der Timer und/oder Überwachungstimer als Zähler implementiert sind.

**10.** Funknetz nach einem der Ansprüche 1 bis 9,
**dadurch gekennzeichnet, daß**
der Timer und/oder Überwachungstimer pro Verbindung und pro Nachbarzelle verwaltet werden.

**11.** Funknetz nach einem der Ansprüche 1 bis 10,
**dadurch gekennzeichnet, daß**
pro Nachbarzelle eine der Festellung, ob sich die Funkversorgung wesentlich oder unwesentlich verbessert hat, dienende Schwelle verwaltet wird.

**12.** Funknetz nach einem der Ansprüche 1 bis 11,
**dadurch gekennzeichnet, daß**
das jeweils einzustellende Zeitintervall ein Maß für die entsprechend der Fahrzeuggeschwindigkeit zu erwartende Verbesserung der Funkfeldversorgung der Mobilstation in der Mikrozelle (MC1, MC2, MC3) bildet.

**Claims**

**1.** Mobile radio network having a number of base stations (BS, BS1, BS2, BS3) in a mutual physical arrangement in the manner of a cellular system in a hierarchical cell structure, comprising a macrocell and at least one microcell (MC1), in which a handover decision process is used to determine whether a mobile station of a mobile radio subscriber is located in the radio supply area of the microcell (MC1) contained in the macrocell, or is approaching this area, by comparison of the measured data (determined by the mobile station and/or the fixed station (BS1)) relating to level, quantity, distance etc. and/or the variables derived from the measured data, with thresholds, characterized by

- a changeover from the radio supply area of the macrocell to the radio supply area of one or more further microcells (MC1, MC2, MC3) taking into account the speed of the mobile radio subscriber in addition to the static handover decisions,
- starting of a device for timing (timer) with any required, but fixed, time interval if the result of the determination in the handover decision process is positive,
- on the basis of the data used in the handover decision process, determining continuously (during the time interval) whether the radio supply for the relevant mobile station by the fixed station (BS1) of the microcell (MC1) has improved significantly or insignificantly,
- inhibiting the microcell (MC1) for an incoming handover for the relevant mobile station if the radio supply with respect to the microcell (MC1) has improved significantly within the time interval, as an indication that the mobile station is moving quickly, and
- requesting a handover to the microcell (MC1) from the handover decision process in the situation when, once the timer has timed out, the radio supply has improved insignificantly, as an indication that the mobile station is moving slowly.

2. Radio network according to Claim 1,
characterized in that
the inhibiting of an incoming handover to the microcell (MC1) for the relevant mobile station is cancelled, and the timer is reset, if the handover decision process finds that the mobile station has left the radio supply area of the microcell (MC1).

3. Radio network according to Claim 2,
characterized in that
the timer is restarted if the handover decision process finds that the mobile station is once again located in the radio supply area of a microcell (MC1, MC2, MC3).

4. Radio network according to one of Claims 1 to 3,
characterized by
a corresponding handover procedure sequence for the situation when the mobile station is assigned to the fixed station (BS1) of a microcell (MC1) in a hierarchical cell structure, and is approaching an adjacent microcell (MC2).

5. Radio network according to Claim 4,
characterized in that,
after a successful handover the timer is stopped and reset.

6. Radio network according to Claim 5,
characterized in that
if the mobile station is moving slowly towards the adjacent microcell (MC2), a handover to the adjacent microcell (MC2) is requested for the mobile station, and, if it is moving quickly, a handover to the macrocell beyond this microcell (MC2) is requested for it.

7. Radio network according to one of Claims 1 to 6,
characterized in that
the time interval to be monitored is greater than or equal to a measurement period for the assessment of the received data used in the handover decision process.

8. Radio network according to one of Claims 1 to 7,
characterized in that
a monitoring timer is provided between the resetting of the timer and the restarting of the timer for one and the same link, which monitoring timer is started when the timer is reset and whose effect is that the timer cannot be started again until the monitoring timer has timed out, if the mobile station is located in the radio supply area of a microcell (MC1, MC2, MC3).

9. Radio network according to one of Claims 1 to 8,
characterized in that
the timer and/or the monitoring timer are implemented as counters.

10. Radio network according to one of Claims 1 to 9,
characterized in that
the timer and/or the monitoring timer are controlled per link and per adjacent cell.

11. Radio network according to one of Claims 1 to 10,
characterized in that
a threshold which is used to determine whether the radio supply has improved significantly or insignificantly is controlled per adjacent cell.

12. Radio network according to one of Claims 1 to 11, characterized in that
the respective time interval to be set is a measure of the improvement to be expected, on the basis of the vehicle speed, of the radio field supply of the mobile station in the microcell (MC1, MC2, MC3).

**Revendications**

1.  Réseau de radiocommunication mobile comportant un certain nombre de stations de base (BS, BS1, BS2, BS3) agencées mutuellement dans l'espace selon un système cellulaire en une structure hiérarchique de cellules, constituée d'une macrocellule et d'au moins une microcellule (MC1), une détermination étant effectuée dans un processus de décision de commutation pour savoir si une station mobile d'un abonné de radiocommunication mobile se trouve dans la zone de couverture radio de la microcellule (MC1) contenue dans la macrocellule ou si elle s'en approche en comparant à des seuils les données mesurées, déterminées par la station mobile et/ou par la station de base (BS1) et concernant le niveau, la qualité, la distance, etc., et/ou les grandeurs déduites des données mesurées,
    caractérisé par

    -   une commutation de la zone de couverture radio de la macrocellule dans la zone de couverture radio d'une ou plusieurs autres microcellules (MC1, MC2, MC3) en tenant compte de la vitesse de l'abonné radio mobile en plus des décisions de commutation statiques,
    -   un déclenchement d'un dispositif pour la détection de temps (minuterie) avec un intervalle de temps quelconque mais constant en cas de résultat positif de la détermination dans le processus de décision de commutation,
    -   une détermination permanente, sur la base des données arrivant dans le processus de décision de commutation pendant l'intervalle de temps, pour savoir si la couverture radio pour la station mobile considérée par la station fixe (BS1) de la microcellule (MC1) s'est nettement améliorée ou non,
    -   une interdiction de la microcellule (MC1) à toute commutation arrivante pour la station mobile considérée lorsque la couverture radio par rapport à la microcellule (MC1) pendant l'intervalle de temps s'est nettement améliorée, ce qui est un signe de déplacement rapide de la station mobile, et
    -   une demande d'une commutation dans la microcellule (MC1) par le processus de décision de commutation pour le cas où la couverture radio après l'écoulement du temps de la minuterie s'est peu améliorée, ce qui est un signe d'un déplacement lent de la station mobile.

2.  Réseau de radiocommunication selon la revendication 1,
    caractérisé par le fait que
    l'interdiction de toute commutation arrivante dans la microcellule (MC1) pour la station mobile considérée est levée et la minuterie est remise à l'état initial lorsque le processus de décision de commutation a constaté que la station mobile a quitté la zone de couverture radio de la microcellule (MC1).

3.  Réseau de radiocommunication selon la revendication 2,
    caractérisé par le fait que
    la minuterie est de nouveau déclenchée lorsque l'on a détecté dans le processus de décision de commutation que la station mobile se trouve de nouveau dans la zone de couverture radio d'une microcellule (MC1, MC2, MC3).

4.  Réseau de radiocommunication selon l'une des revendications 1 à 3,
    caractérisé par
    une exécution correspondante de la procédure de commutation pour le cas où la station mobile est associée à la station fixe (BS1) d'une microcellule (MC1) d'une structure hiérarchique de cellules et s'approche d'une microcellule (MC2) voisine.

5.  Réseau de radiocommunication selon la revendication 4,
    caractérisé par le fait que,
    après qu'une commutation a été effectuée, la minuterie est arrêtée et remise à l'état initial.

6.  Réseau de radiocommunication selon la revendication 5,
    caractérisé par le fait que,
    lors d'un déplacement lent de la station mobile vers la microcellule (MC2) voisine, une commutation dans la microcellule (MC2) voisine est demandée pour la station mobile considérée et, lors d'un déplacement rapide, une commutation dans la macrocellule de niveau hiérarchique supérieur est demandée pour la station mobile considérée.

7.  Réseau de radiocommunication selon l'une des revendications 1 à 6,
    caractérisé par le fait que
    l'intervalle de temps à contrôler est supérieur ou égal à une période de mesure pour l'évaluation des données reçues entrant dans le processus de décision de commutation.

8. Réseau de radiocommunication selon l'une des revendications 1 à 7,
caractérisé par le fait que,
entre la remise à l'état initial de la minuterie et le nouveau déclenchement la minuterie pour la même liaison, il est prévu une minuterie de contrôle qui est déclenchée lors de la remise à l'état initial de la minuterie et qui fait en sorte que la minuterie ne puisse être déclenchée de nouveau qu'après l'écoulement du temps de la minuterie de contrôle si la station mobile se trouve dans la zone de couverture radio d'une microcellule (MC1, MC2, MC3).

9. Réseau de radiocommunication selon l'une des revendications 1 à 8,
caractérisé par le fait que
la minuterie et/ou la minuterie de contrôle sont mises en oeuvre sous forme de compteurs.

10. Réseau de radiocommunication selon l'une des revendications 1 à 9,
caractérisé par le fait que
la minuterie et/ou la minuterie de contrôle sont gérées pour chaque liaison et chaque cellule voisine.

11. Réseau de radiocommunication selon l'une des revendications 1 à 10,
caractérisé par le fait que,
pour chaque cellule voisine, il est géré un seuil pour savoir si la couverture radio s'est nettement améliorée ou non.

12. Réseau de radiocommunication selon l'une des revendications 1 à 11,
caractérisé par le fait que
l'intervalle de temps à régler à chaque fois est une mesure pour l'amélioration, à attendre d'après la vitesse du véhicule, de la couverture radio de la station mobile dans la microcellule (MC1, MC2, MC3).

FIG 1

MESSDATEN VON MS/BS

PEGEL DOWNLINK
PEGEL UPLINK
QUALITAET (BER)
DISTANZ

FILTERUNG DER MESSDATEN

HANDOVER-ENTSCHEIDUNGS-PROZESS

HANDOVER-ANFORDERUNG

EP 0 589 279 B1

FIG 2

MACROCELL TO MICROCELL HANDOVER

MACROCELL TO MACROCELL HANDOVER

MICROCELL TO MICROCELL HANDOVER

MICROCELL TO MACROCELL HANDOVER

MACROCELL

BS

BS1

BS2

BS3

MC1

MC2

MC3

EP 0 589 279 B1

EP 0 589 279 B1

FIG 3

BS MAKRO

BS Me

BS Ma

BS Mc

BS Md

a

MS

BS Mf

b

c

d

e

f

g

BS Mb

EP 0 589 279 B1

FIG 4

FIG 5

BS$_{MAKRO}$

BS$_M$

MS$_{FAST}$

a  b  c  d  e

FIG 6

FIG 7

RXLEV

RXLEV_DL_MAKRO

FIG 8

RXLEV_DL_MIKRO

dBm

RXLEV_MIN

MOBILSTATION

DISTANCE

PBGT

dB

FIG 9

HO_TEMP_MARGIN

HO_MARGIN

HO_STATIC_OFFSET

S   T  A B                    Q

DISTANCE

EP 0 589 279 B1